# EUROPEAN PATENT SPECIFICATION

(11) **EP 0 977 947 B1**
(45) Date of publication and mention of the grant of the patent: **11.04.2001**
(21) Application number: 98901134.1
(22) Date of filing: 26.01.1998
(51) Int. Cl.: F03D 11/04, F03D 1/02

(54) **WIND TURBINE**
WINDTURBINE
EOLIENNE

(30) Priority: 24.01.1997 NL 1005089
(43) Date of publication of application: 09.02.2000
(73) Proprietor: Beheermaatschappij P. Buitendijk B.V., 3336 LE Zwijndrecht (NL)
(72) Inventor: VAN DEIJL, Theodorus, Jozef, Johannes, Maria, NL-5632 BJ Eindhoven (NL)
(74) Representative: de Bruijn, Leendert C.
(86) International application number: NL9800054
(87) International publication number: WO9832968

(56) References cited:
- EP-A- 0 761 964
- DE-A- 4 413 278
- DE-A- 4 432 800
- DE-C- 672 606
- DE-C- 742 242
- DE-C- 830 180
- FR-A- 2 413 566
- FR-A- 2 568 948

## Description

The invention relates to a device for generating electric power with the aid of wind, comprising: a mast, at least one wind turbine with a rotor and radially projecting vanes, which wind turbine is attached to an arm which can rotate, by means of a horizontal rotary shaft connected to the mast, in such a manner that the wind turbine can adopt relatively high and relatively low positions as desired, it moreover being possible for the arm to rotate about a vertical shaft which approximately corresponds to the axis of the mast.

A device of this kind is known from FR-A-2,568,948.

The ability to rotate the wind turbine from a high position to a low position considerably increases the accessibility of the turbine, which is important for maintenance and replacement of components.

It is known to use a number of wind turbines per mast in order to be able to generate considerably more electric power per mast.

FR-A-2,413,566 describes a device for generating electric power comprising a number of hollow tubular arms which at one end are welded to a central casting and at the other end are provided with a wind turbine. The casting is attached to a mast in such a manner that it cannot rotate.
This structure has the drawback that the wind turbines exhibit uneven levels of wear, since wind turbines disposed at a high level are subject to higher wind speeds, and hence higher wear, than wind turbines which are disposed at a low level.

Proceeding from the device according to the preamble, the object of the invention is to be able to generate considerably more electric power per mast while nevertheless avoiding the abovementioned drawback of FR-A-2,413,566 (uneven wear to the various wind turbines).

According to the invention, for this purpose the device is characterized in that the device comprises three or more arms rotatable about a common horizontal rotary shaft, each of said arms having a wind turbine attached thereto, said arm forming part of a frame extending perpedicularly to said common rotary shaft, and that said common horizontal rotary shaft is situated approximately in the center of gravity of said frame.

An additional advantage of the structure according to the invention is that the turbines can be made easily accessible for maintenance purposes, in particular if a platform on which people carrying out this work can stand is arranged in the vicinity of a low position of a wind turbine, and if a vertically displaceable lift platform is arranged on the mast for the purpose of moving components up and down between a low position and a high position, in which the lift platform is situated approximately opposite a location where a rotor generator unit is or can be arranged.

Preferably, the frame comprises three or more compression bars, which intersect one another at the said centre of gravity and are connected to one another at their outer ends by tensioning cables or tie rods, the rotor generator units being attached to the outer ends of the compression bars.

The rotation of the frame can take place in a controlled manner if the said rotary shaft is extended by a rotary shaft on which a mechanism, such as a gearwheel transmission, acts.

It is very important that the frame can be fixed in terms of rotation, and to this end the mast is provided at its top part with a cross-beam for fixing the frame in terms of rotation.

The invention will now be explained with reference to the figures, in, which:
Figure 1 shows a front view of an embodiment of a device designed according to the invention for generating electric power with the aid of wind.
Figure 2 shows a front view of the device while mounting components.
Figure 3 shows a side view of a particular embodiment.

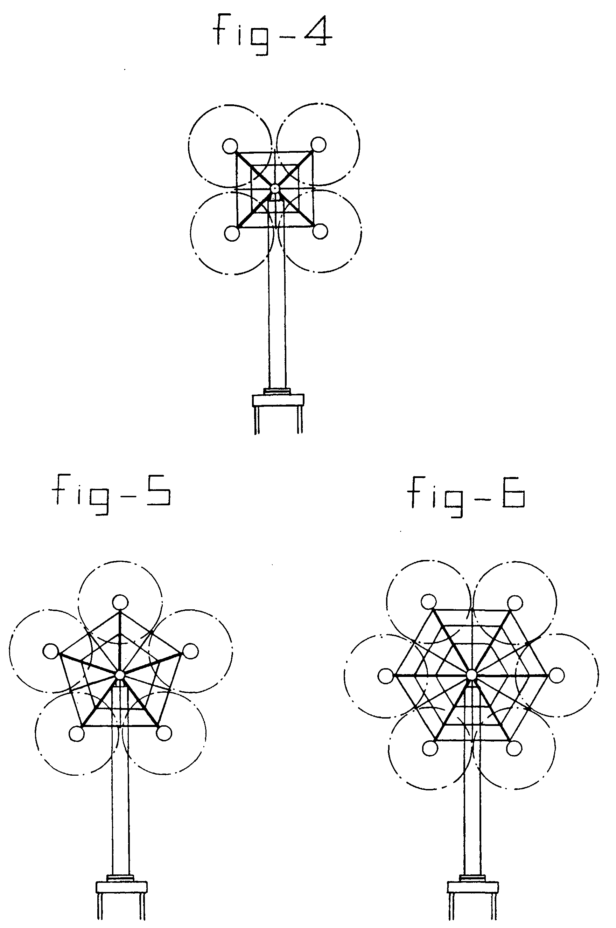

Figures 4, 5, 6 show various designs of multi-wind-turbines according to the invention.
Figure 7 shows a side view of part of an alternative embodiment.
Figure 8 shows a side view of part of yet another alternative embodiment.
Figure 9 shows a side view of the top part of an embodiment which is improved by comparison with the embodiment in accordance with Figure 3.

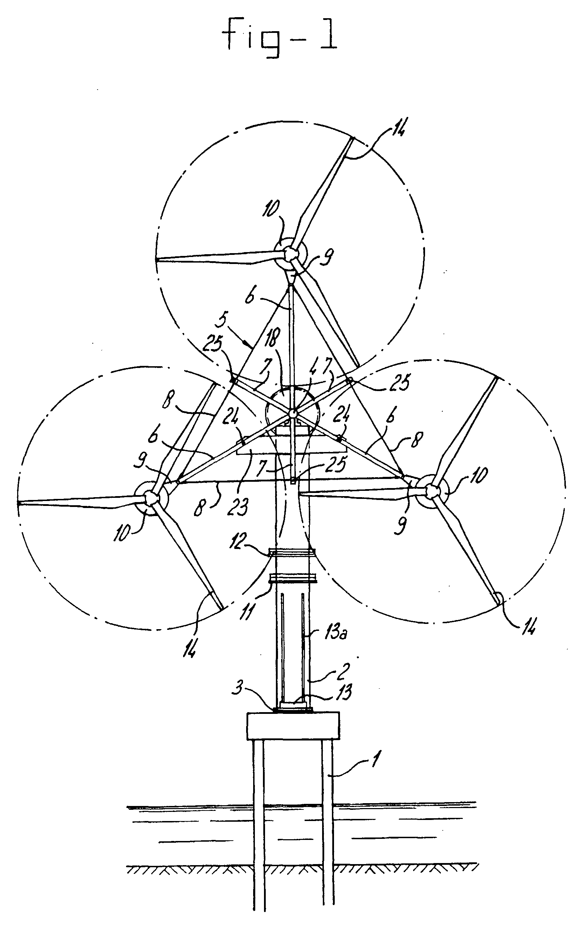

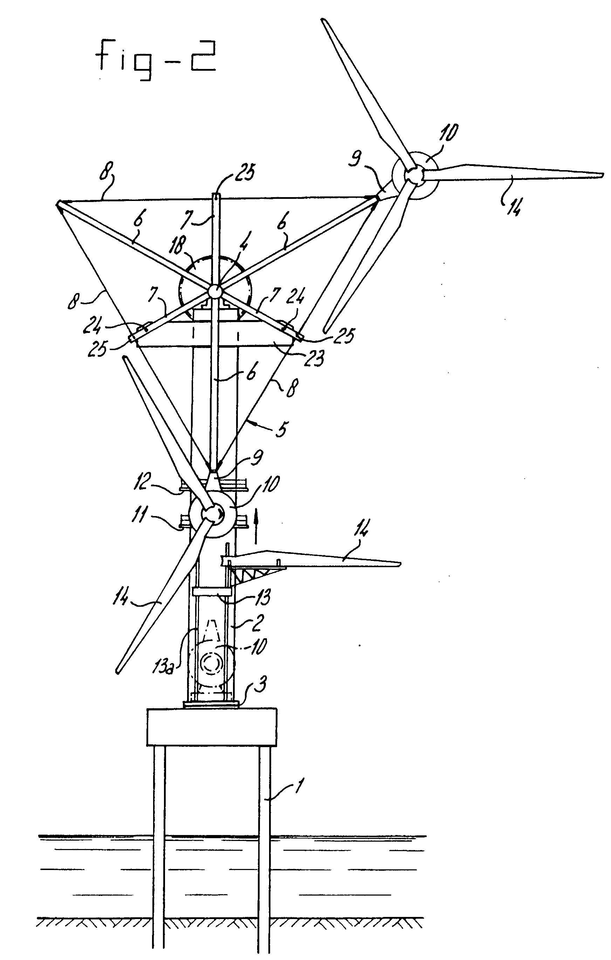

The device illustrated in Figures 1 and 2 for generating electric power with the aid of wind is arranged on a support structure 1 which rests on the bed of a sea or lake. The device itself comprises a mast 2, which is supported rotatably on a rotating ring 3 arranged on the support structure 1. A horizontal rotary shaft 4, which is situated in the centre of gravity of a triangular frame 5, is mounted on the top end of the mast 2. This frame comprises three compression bars 6, three retaining bars 7, which each lie in line with a compression bar, and tensioning cables and/or tie rods 8. The compression bars 6 and retaining bars 7 intersect one another in the said centre of gravity of the frame. The tensioning cables and/or tie rods 8 are connected to the outer end of the retaining bars 7 and join the corners of the holding frame together. The coupling piece 9 of a rotor generator unit 10 is detachably fastened to the radial end of each compression bar 6.

A maintenance platform 11 and a mounting platform 12 are arranged fixedly approximately halfway up the mast 2. Using a lift 13, which is guided along vertical rails 13a, a rotor generator unit 10 can be moved up to a position where the coupling piece 9 of such a unit is guided to opposite the downward-facing end of a compression bar 6, it being possible to connect the coupling piece 9 and the end of the compression bar 6 on the platform 12, for example using a flange joint.

Using the lift 13 the vanes 14 of the turbine can be moved into a position in which they can be attached to a rotor generator unit. To this end, the lift'has projecting support surfaces for storing spare vanes 14 and rotor generator units 10.

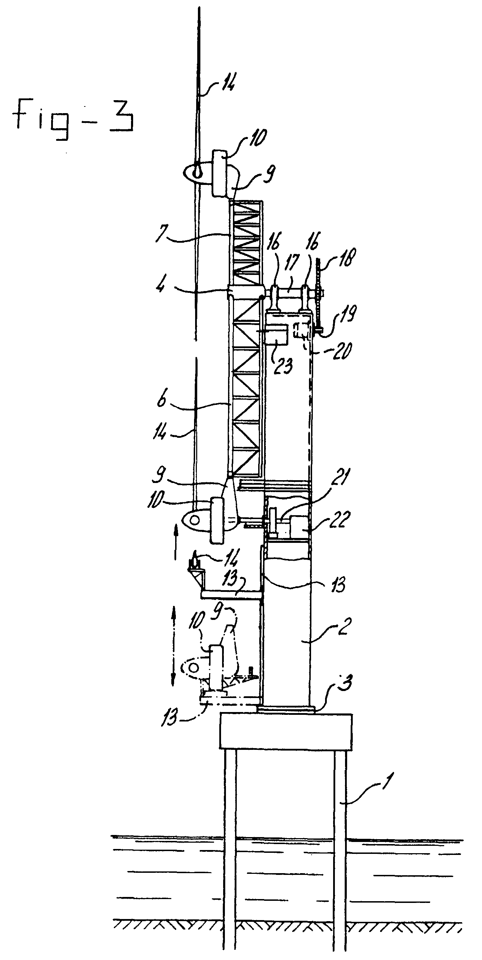

Figure 3 shows that the compression bars 6 form part of a lattice-work girder which extends in the plane of the wind direction, i.e. a compression bar 6 is always arranged on either side of a lattice-work girder. The cables 8 are attached to both the front face and the rear face of the lattice-work, in order to produce a torsionally rigid structure.

At the top of the mast 2, there are arranged two bearings 16, in which a shaft 17 is mounted, forming part of or connected to the rotary shaft 4 of the frame. A large gearwheel 18 is mounted on the end of the shaft 17. A pinion 19, which can be rotated by a motor using transmission 20, engages in the gearwheel 18. It will be clear that this allows the frame 5 to be rotated. The operating position for the case where there are three turbines 10,14 is shown in Figure 1. Rotating the frame 5 through 60° from the operating position shown in Figure 1 produces a mounting and/or maintenance position which is illustrated in Figure 2. It can be seen in this figure that the lift 13 is used to convey a vane 14 towards a correctly mounted rotor generator unit.

Since the strength of the wind differs at different heights, it is recommended to rotate the frame 5 regularly through 120° from the position shown in Figure 1. This ensures uniform wear to the wind turbines.

In Figure 3, it is possible to see on the underside of the holding frame a rotor generator unit 10, the shaft of which has been temporarily extended by an auxiliary shaft 21. With the aid of a gearbox 22, this auxiliary shaft can be fixed or rotated in order to change the rotor position while mounting the vanes.

A cross-beam 23, to which the holding frame 6 can be fixed at the points 24, is positioned in the region of the top end of the mast 2. The fixing means could be remotely operable locking pins. The holding frame can also be fixed with respect to the mast 2 at point 25. The cross-beam 23 could be integrated in a four-legged mast structure, so that the fixing points at the end of the cross-beam coincide with the corners of the frame.

The wind turbines preferably do not have gearwheels; the electromechanical part can then have a rotationally symmetrical structure in the plane of rotation. This allows turbines to be fixed directly to the ends of the compression bars, without using a bracket, for example by means of a flange joint.

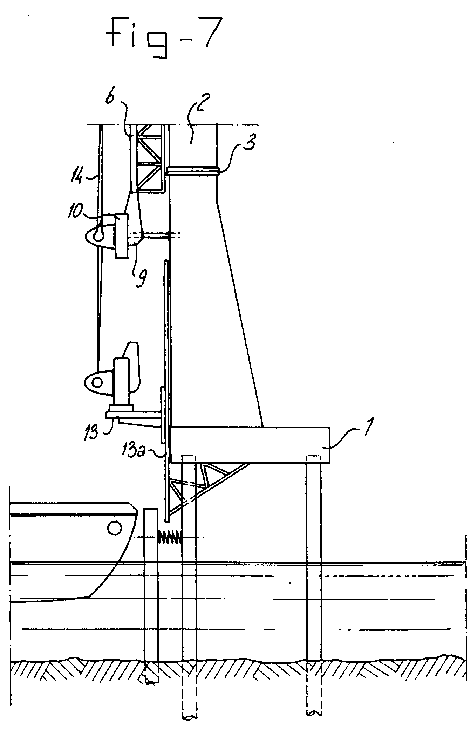

In the alternative embodiment in accordance with Figure 7, the vertical rails 13a of the lift platform 13 are extended downwards to approximately the deck level of a supply ship. Components, such as a rotor generator unit, vanes and the like, can then be raised from the ship to the desired position close to the mounting platform 12 using the platform 13. The mast 2 is positioned eccentrically on the support structure 1 in such a manner that the rails 13a are situated on the outside of the support structure 1. The rotating ring 3 is situated at a distance above the mounting platform 12.

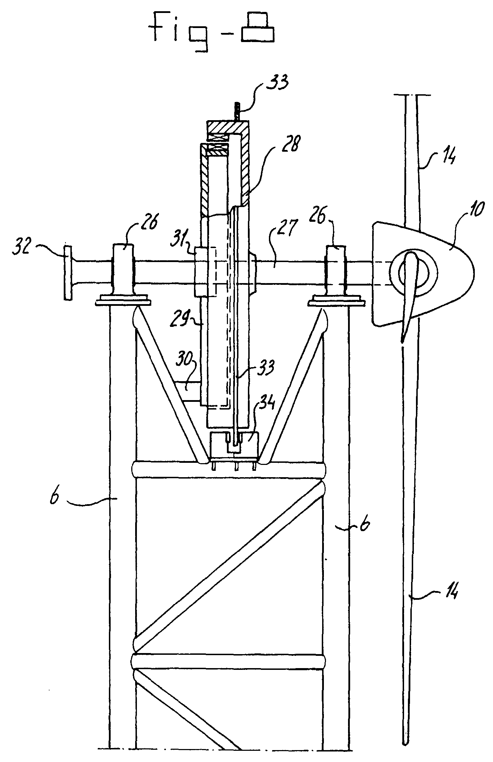

The embodiment in accordance with Figure 8 represents an addition to that shown in Figure 3. Bearings 26, in which a horizontal shaft 27 is mounted, are arranged at the ends of the bars 6. Three components are attached to this horizontal shaft: on the front, there is a rotor generator unit 10 with vanes 14, in the centre there is a generator without gearwheels, comprising a rotating rotor part 28 and a stator part 29, which is fastened fixedly to the support arm by means of a coupling flange 30, the horizontal shaft passing through the stator part with bearing housing 31, and on the rear side there is a coupling flange 32 which can now be coupled directly to the gearbox 22 without an auxiliary shaft 20. A concentric brake ring 33 can be arranged on the circumference of the rotor part. The rotor generator unit can be brought to a standstill by means of the brake blocks 34. These brake blocks are arranged in the lattice-work system.

Depending on the lifting capacity of the lift, it is also possible to raise other combinations of components, whether in their entirety or in separate parts. In the case of a very heavy generator, for example of eight tonnes, it could be raised upwards in two halves. If the weight of the rotor with vanes lies below a specific value, for example six tonnes, it can be raised upwards in its entirety, including the vanes. The distribution of the components to be raised upwards can only be determined definitively after the final design has been made. It will always be possible to modify this distribution.

Obviously, the device according to the invention is also suitable for use on land.

In principle, it would also be possible to use one compression arm with wind turbine on a rotary shaft which is connected to the mast, in which case a counterweight is used in order to position the centre of gravity approximately at the location of the rotary shaft. It is also possible for two compression arms to lie in line with one another, with the rotary shaft situated centrally between the wind turbines.

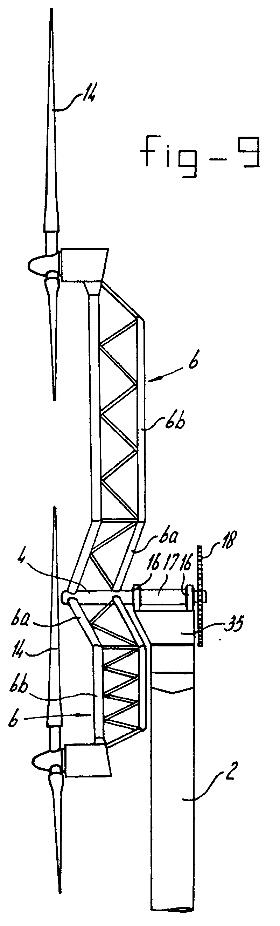

The embodiment in accordance with Figure 9 differs from that in accordance with Figure 3 by the fact that the upper part of the mast 2 is designed as a bracket 35 which is widened with respect to the top end of the mast, two bearings being arranged on this bracket at a relatively great distance from one another, by means of which bearings the shaft 17 is mounted as an extension piece to the horizontal rotary shaft 4. Furthermore, the arms 6, which are designed as lattice-work girders, have an inclined section 6a which merges into a section 6b which runs directly along the mast 2. This embodiment reduces the moment and improves the support of the frame 5.

## Claims

1. Device for generating electric power with the aid of wind, comprising a mast (2), a wind turbine (10, 14) with a rotor (10) and radially projecting vanes (14), which wind turbine is attached to an arm (6) which can rotate by means of a horizontal rotary shaft (4) connected to the mast (2), in such manner that the wind turbine can adopt relatively high and relatively low positions as desired, it being possible for the arm (6) to rotate about a vertical shaft which approximately corresponds to the axis of the mast (2), characterized in that the device comprises three or more arms (6) rotatable about a common horizontal rotary shaft (4), each of said arms (6) having a wind turbine (10, 14) attached thereto, said arms forming part of a frame (5) extending perpedicularly to said common rotary shaft (4), and that said common horizontal rotary shaft (4) is situated approximately in the center of gravity of said frame (5).

2. Device according to Claim 1, characterized in that the mast (2) is provided at its top part with a cross-beam (23) for fixing the frame (5) in terms of rotation.

3. Device according to Claim 1 or 2, characterized in that the said rotary shaft (4) is extended by a rotary shaft (17) on which a mechanism, such as a gearwheel transmission (18,19,20), acts, in order to be able to rotate the frame (5) in a controlled manner.

4. Device according to one of the preceding claims, characterized in that the frame (5) comprises three or more compression bars (6), which intersect one another at the said centre of gravity and are connected to one another at their outer ends by tension cables or tie rods (8), the wind turbines (10,14) being attached to the outer ends of the compression bars (6).

5. Device according to one of the preceding claims, characterized in that a vertically displaceable lift platform (13) is arranged on the mast (2) for the purpose of moving components up and down between a low position and a high position, in which the lift platform is situated approximately opposite a location where a rotor generator unit (10) is or can be arranged.

6. Device according to one of the preceding claims, characterized in that the compression bars (6) of the frame comprise a lattice-work.

7. Device according to one of the preceding claims, Characterized in that the mast (2) is disposed on a support structure (1) with the interposition of a rotating ring (3).

8. Device according to one of the preceding claims, characterized in that each rotor generator unit (10) is provided with a radially projecting coupling piece (9) (lantern ring), by means of which the unit can be mounted on and removed from the end of a frame arm (6) or frame compression bar (6).

9. Device according to one of the preceding claims, characterized in that the rotor shaft of each rotor generator unit (10) can be extended by a temporary auxiliary shaft (21) so as to reach a gearbox (22) mounted in or on the mast (2).

## Patentansprüche

1. Vorrichtung zum Erzeugen elektrischer Energie mittels des Winds, mit einem Mast (2), einer Windturbine (10, 14) mit einem Rotor (10) und radial abstehenden Flügeln (14), wobei die Windturbine an einem Arm (6) befestigt ist, der sich mittels einer horizontalen Drehwelle (4) drehen kann, die auf solche Weise mit dem Mast (2) verbunden ist, dass die Windturbine nach Wunsch relativ hohe und relativ niedrige Positionen einnehmen kann, wobei sich der Arm (6) um eine vertikale Welle drehen kann, die ungefähr der Mastachse (2) entspricht, **dadurch gekennzeichnet**, dass die Vorrichtung drei oder mehr Arme (6) aufweist, die sich um eine gemeinsame horizontale Drehwelle (4) drehen können, wobei an jedem der Arme (6) eine Windturbine (10, 14) befestigt ist und wobei jeder der Arme einen Teil eines Rahmens (5) bildet, der sich rechtwinklig zur gemeinsamen Drehwelle (4) erstreckt, und dass sich diese gemeinsame horizontale Drehwelle (4) ungefähr im Schwerpunkt des Rahmens (5) befindet.

2. Vorrichtung nach Anspruch 1, **dadurch gekennzeichnet**, dass der Mast (2) in seinem oberen Teil mit einem Querträger (23) zum rotationsmäßigen Befestigen des Rahmens (5) versehen ist.

3. Vorrichtung nach Anspruch 1 oder 2, **dadurch gekennzeichnet**, dass die Drehwelle (4) durch eine Drehwelle (17) verlängert ist, auf die ein Mechanismus wie ein Getriebe (18, 19, 20) einwirkt, um den Rahmen (5) auf kontrollierbare Weise verdrehen zu können.

4. Vorrichtung nach einem der vorstehenden Ansprüche, **dadurch gekennzeichnet**, dass der Rahmen (5) drei oder mehr Druckstäbe (6) aufweist, die einander im Schwerpunkt schneiden und an ihren Außenenden durch Zugkabel oder Verbindungsstangen (8) miteinander verbunden sind, wobei die Windturbinen (10, 14) an den Außenenden der Druckstäbe (6) befestigt sind.

5. Vorrichtung nach einem der vorstehenden Ansprüche, **dadurch gekennzeichnet**, dass am Mast (2) eine vertikal verschiebbare Liftplatte (13) angeordnet ist, um Komponenten zwischen einer niedrigen und einer hohen Position nach oben und unten zu bewegen, wobei die Liftplatte ungefähr einem Ort gegenüberstehend angeordnet ist, an dem sich eine Rotorgeneratoreinheit (10) befindet oder angeordnet werden kann.

6. Vorrichtung nach einem der vorstehenden Ansprüche, **dadurch gekennzeichnet**, dass die Gitterstäbe (6) des Rahmens ein Gitterwerk bilden.

7. Vorrichtung nach einem der vorstehenden Ansprüche, **dadurch gekennzeichnet**, dass der Mast (2) unter Einfügung eines Drehrings (3) an einer Trägerkonstruktion (1) angeordnet ist.

8. Vorrichtung nach einem der vorstehenden Ansprüche, **dadurch gekennzeichnet**, dass jede Rotorgeneratoreinheit (10) mit einem radial abstehenden Verbindungsteil (9) (Laternenring) versehen ist, durch das die Einheit am Ende eines Rahmenarms (6) oder eines Rahmendruckstabs (6) angebracht oder von diesem abgenommen werden kann.

9. Vorrichtung nach einem der vorstehenden Ansprüche, **dadurch gekennzeichnet**, dass die Rotorwelle jeder Rotorgeneratoreinheit (10) durch eine zeitweilig angebrachte Hilfswelle (21) verlängert werden kann, um ein im oder am Mast (2) angebrachtes Getriebe (22) zu erreichen.

## Revendications

1. Dispositif de génération de courant électrique à l'aide du vent, comprenant un mât (2), une éolienne (10, 14) formée d'un rotor (10) et de pales faisant saillie de façon radiale (14), l'éolienne étant fixée à un bras (6) qui peut tourner au moyen d'un axe rotatif horizontal (4) relié au mât (2) de telle sorte que l'éolienne peut prendre une position relativement haute et une position relativement basse, selon les besoins, pour autant que le bras (6) puisse tourner autour d'un arbre vertical qui correspond approximativement à l'axe du mât (2), caractérisé en ce que le dispositif comprend trois bras (6) ou plus qui peuvent tourner autour d'un arbre rotatif horizontal commun (4), une éolienne (10, 14) étant fixée sur chacun desdits bras (6), lesdits bras faisant partie d'une armature (5) s'étendant perpendiculairement audit arbre rotatif commun (4), et en ce que l'arbre rotatif horizontal commun (4) est situé approximativement au niveau du centre de gravité de ladite armature (5).

2. Dispositif selon la revendication 1, caractérisé en ce que le mât (2) est muni en sa partie supérieure d'une poutre transversale (23) en vue de fixer l'armature (5) lors de la rotation.

3. Dispositif selon la revendication 1 ou 2, caractérisé en ce que ledit arbre rotatif (4) est prolongé par un arbre rotatif (17) sur lequel un mécanisme, tel qu'une transmission par pignon (18, 19, 20), agit, de manière à pouvoir faire tourner l'armature (5) de façon commandée.

4. Dispositif selon l'une des précédentes revendications, caractérisé en ce que l'armature (5) comprend trois barres de compression (6) ou plus, qui se croisent les unes et les autres au niveau dudit centre de gravité et sont reliées les unes aux autres au niveau de leurs extrémités extérieures par des câbles tendus ou tirants (8), les éoliennes (10, 14) étant montées aux extrémités extérieures des barres de compression (6).

5. Dispositif selon l'vne des revendications précédentes, caractérisé en ce qu'une plate-forme élévatrice à déplacement vertical (13) est agencée sur le mât (2) dans le but de déplacer les composants vers le haut et vers le bas entre une position basse et une position haute, dans laquelle la plate-forme élévatrice se situe approximativement en face d'un emplacement où un générateur à un rotor (10) est ou peut être agencé.

6. Dispositif selon l'une des précédentes revendications, caractérisé en ce que les barres de compression (6) de l'armature comprennent un treillis.

7. Dispositif selon l'une des revendications précédentes, caractérisé en ce que le mât (2) repose sur une structure de support (1), un anneau rotatif (3) étant interposé.

8. Dispositif selon l'une des revendications précédentes, caractérisé en ce que chaque générateur à rotor (10) est muni d'une pièce d'accouplement faisant saillie de façon radiale (9) (lanterne), au moyen de laquelle le générateur peut être monté et retiré de l'extrémité d'un bras d'armature (6) ou barre de compression d'armature (6).

9. Dispositif selon l'une des revendications précédentes, caractérisé en ce que l'arbre de chaque générateur à rotor (10) peut être prolongé par un arbre auxiliaire temporaire (21) de manière à atteindre une boîte à engrenages (22) montée dans ou sur le mât (2).
